Europäisches Patentamt

European Patent Office

Office européen des brevets

(19)

(11) Veröffentlichungsnummer: **0 015 303**
**B1**

(12) **EUROPÄISCHE PATENTSCHRIFT**

(45) Veröffentlichungstag der Patentschrift:
17.11.82

(51) Int. Cl.³: **B 60 R 9/04**

(21) Anmeldenummer: **79103677.5**

(22) Anmeldetag: **28.09.79**

(54) **Autodach-Lastträger.**

(30) Priorität: **02.03.79 DE 2908176**

(43) Veröffentlichungstag der Anmeldung:
**17.09.80 Patentblatt 80/19**

(45) Bekanntmachung des Hinweises auf die Patenterteilung:
**17.11.82 Patentblatt 82/46**

(84) Benannte Vertragsstaaten:
**AT BE CH DE FR GB IT NL SE**

(56) Entgegenhaltungen:
**DE-U-1 900 113**
**US-A-4 101 061**

(73) Patentinhaber: **Wünstel, Franz, Dipl.-oec. Ing. (grad.),**
**Morellstrasse 1, D-8900 Augsburg (DE)**

(72) Erfinder: **Wünstel, Franz, Dipl.-oec. Ing. (grad.),**
**Morellstrasse 1, D-8900 Augsburg (DE)**

(74) Vertreter: **Hübner, Hans-Jürgen, Dipl.-Ing.,**
**Mozartstrasse 21, D-8960 Kempten (DE)**

Autodach-Lastträger

Die Erfindung bezieht sich allgemein auf Traggestelle, die auf den Dächern von Personenwagen lösbar angeordnet werden können, um Lasten beliebiger Art, wie Gepäckstücke, Skier, Sportgeräte, Surfbretter u. dgl. transportieren zu können.

Die Erfindung betrifft einen Autodach-Lastträger, bestehend aus mindestens vier, jeweils paarweise durch einen Querträger miteinander verbundenen Stützen, deren Enden Füße aufweisen, die auf der Dachrinne des Fahrzeugdaches aufliegen, wobei jeder Stütze eine, die Dachrinne untergreifende Kralle zugeordnet ist, derart, daß die Dachrinne jeweils zwischen einem Fuß und einer Kralle eingeklemmt ist, und wobei die beiden Querträger durch mindestens einen Längsträger zu einem Gestell miteinander verbunden sind.

Bei solchen Autodach-Lastträgern, kurz Gepäckträger genannt, sind die Montage und die Demontage umständlich, da jede Kralle eine eigene Schraubverbindung aufweist. Alle Schraubverbindungen müssen gelöst werden, um den Gepäckträger abnehmen zu können. Ein weiterer Nachteil des bekannten Gepäckträgers besteht darin, daß er auch von Unbefugten leicht abgenommen werden kann. Dieser Gepäckträger ist also nicht diebstahlsicher. Dieser Nachteil wiegt um so schwerer, wenn der Gepäckträger ein Gepäckgehäuse aufweist, in dem sich Gepäck befindet. In diesem Fall braucht das Gehäuse nicht aufgebrochen zu werden, sondern Unbefugte brauchen lediglich die vier Schrauben zu lösen, um den ganzen Gepäckträger mit dem Gepäck abnehmen zu können.

Es sind auch schon Autodach-Lastträger bekannt (US-A-4 101 061), bei denen die zu einem Querträger gehörenden Stützen im hohlen Querträger axial verschieblich geführt sind und durch einen gemeinsamen Spindelantrieb einander angenähert oder voneinander entfernt werden können. Dabei weist jeder Stützenfuß zwei beweglich angelenkte Halteteile (Stützglied und Haltekralle) auf, über die der Träger am Fahrzeug abgestützt und verankert werden kann. Aufgrund der beweglich angelenkten Halteteile ist die Montage dieses Trägers jedoch nicht problemlos.

Aufgabe der Erfindung ist es, einen neuartigen Autodach-Lastträger zu schaffen, der die obengenannten Nachteile vermeidet. Insbesondere sollen die Montage und die Demontage schneller und einfacher durchführbar sein und der Lastträger soll gegen unbefugte Abnahme vom Autodach gesichert sein.

Diese Aufgabe wird erfindungsgemäß dadurch gelöst, daß jede Kralle an einem, in der Stütze längsverschiebbar gelagerten Schieber angeordnet ist, und daß an einem der Träger eine zentrale, von Hand oder motorisch betätigbare Antriebseinrichtung vorgesehen ist, mit welcher alle Schieber über je eine Antriebsverbindung verbunden sind. Vorzugsweise ist die Antriebseinrichtung in einem mittleren Längsträger vorgesehen.

Der Vorteil der Erfindung besteht darin, daß eine einzige Antriebseinrichtung für sämtliche vier oder mehr Krallen vorgesehen ist, die alle synchron betätigt werden. Die Antriebseinrichtung benötigt eine einzige Handbewegung oder einen einzigen kurzzeitigen Bewegungszyklus, um alle Stützen des Lastträgers am Autodach sicher zu verklemmen. Diese Zentralbedienung erleichtert die Montage und die Demontage des Autodachträgers wesentlich. Darüber hinaus wird die Antriebseinrichtung erfindungsgemäß in der Klemmstellung der Krallen verriegelt und verschlossen, so daß eine Betätigung durch Unbefugte ausgeschlossen ist.

Obwohl je zwei oder mehr Schieber antriebsmäßig zusammengefaßt werden können und eine gemeinsame Verbindung mit der Antriebseinrichtung aufweisen können, wird erfindungsgemäß vorgezogen, jedem Schieber eine eigene Antriebsverbindung bis zur Antriebseinrichtung zuzuordnen, mit dem Vorteil, daß bei einer Beschädigung einer Antriebsverbindung oder einer Dachrinnenverklemmung die anderen drei Stützen funktionstüchtig bleiben, wodurch zusätzliche Sicherheit gewonnen wird.

Eine erste Ausführungsform der Erfindung sieht vor, daß die Schieber je mittels einer Feder in Offenstellung der Kralle vorgespannt sind und daß die Antriebsverbindung aus einem Seilzug und/oder Zuggestänge besteht. Dabei weist die Antriebseinrichtung vorzugsweise eine zwischen zwei Endstellungen drehbare Exzenterscheibe auf, an deren zwei einander diametral gegenüberliegenden Enden jeweils zwei Antriebsverbindungen befestigt sind. Zur Sicherheit ist weiterhin vorgesehen, daß jede Antriebsverbindung eine eigene Aufhängung an der Exzenterscheibe aufweist. Die Exzenterscheibe, die aus einem zweiarmigen Schwenkhebel bestehen kann, an dessen Enden die Seilzüge aufgehängt sind, kann mittels eines abnehmbaren Handgriffs um einen Winkel von etwa 90° aus der Offenstellung in die Sperrstellung gedreht werden und wird in der Sperrstellung mittels einer Sperreinrichtung gesichert, die die Exzenterscheibe festklemmt. Zu diesem Zweck ist im Längsträger ein verschiebbarer Keil vorgesehen, der in der Sperrstellung zwischen Exzenterscheibe und Längsträgerwand liegt. Dieser Keil ist vorzugsweise mittels einer Feder in Sperrstellung vorgespannt. Beim Spannen der Zugseile durch Verdrehen der Exzenterscheibe gleitet also der Sperrkeil selbsttätig nach und bewirkt eine selbsttätige Arretierung der Exzenterscheibe in der Sperrstellung. Zum Lösen hat der Sperrkeil einen aus dem Längsträger herausgeführten handbetätigbaren Stift. Um eine unbefugte Betätigung auszuschließen, ist der Sperrkeil seinerseits gemäß einer weiteren Ausbildung der Erfindung mittels einer Verriegelungseinrichtung in Sperrstellung verriegelt und diese Verriegelungseinrichtung ist mittels eines Schlosses absperrbar.

Eine alternative Ausführungsform der Erfindung besteht darin, daß im Längsträger eine Gewindestange mit zwei gegenläufigen Gewindeabschnitten drehbar und axial unverschiebbar gelagert ist und mit einem Drehantrieb verbunden ist und daß auf beiden Gewindeabschnitten je ein Gewindestück längsbeweglich, jedoch undrehbar angeordnet ist, an welchem die Antriebsverbindungen paarweise verankert sind.

Eine weitere Alternative besteht erfindungsgemäß darin, daß der Schieber ein Gewindestück aufweist, das mit einer Schraubspindel in Eingriff steht, welche über eine biegsame Welle mit der Antriebseinrichtung verbunden ist. Bei dieser Ausführungsform sind vorzugsweise im Längsträger zwei parallele und im Antriebseingriff stehende Wellen drehbar gelagert, mit denen die biegsamen Wellen direkt oder über Getrieberäder miteinander derart verbunden sind, daß beim Drehen einer der Wellen alle Schraubspindeln synchron und mit gleicher Geschwindigkeit gedreht werden.

Schließlich besteht eine wichtige andere alternative Ausführungsform der Erfindung darin, daß der Schieber mit einer in der Stütze angeordneten Druckmittel-Kolbenzylinderanordnung verbunden ist und daß alle Druckmittel-Kolbenzylinderanordnungen über Druckmittelleitungen an eine handbetätigbare Pumpe angeschlossen sind. Diese ist vorzugsweise im zentralen Längsträger vorgesehen. Jede Druckmittel-Kolbenzylinderanordnung hat vorzugsweise eine eigene Druckmittelleitung und ein eigenes Absperrventil. Wenn eine der Zweigleitungen defekt ist, so wird die Funktion der übrigen Klemmungen der Stützen am Autodach nicht beeinträchtigt. Auch bei dieser Ausführungsform läßt sich die Ventileinrichtung leicht mittels eines Schlosses versperren, so daß eine Betätigung durch Unbefugte ausgeschlossen wird.

Wichtig ist, daß alle Verbindungseinrichtungen in den Stützen und Trägern von außen unzugänglich untergebracht sind, so daß damit unbefugte Manipulationen ausgeschlossen sind.

Im vorstehenden sind verschiedene alternative Ausführungsformen der Erfindung schwerpunktmäßig angesprochen worden. Es versteht sich, daß auch andere, insbesondere mechanische Ausgestaltungen unter die Erfindung fallen, so beispielsweise die Anordnung von jeweils zwei Schwenkhebeln in jedem Querträger, die jeweils paarweise von zwei Schwenkhebeln im Längsträger von einer zentralen Betätigungseinrichtung her verschwenkt werden, um die Schieber aus der Sperrstellung in die Offenstellung zu schieben und umgekehrt.

Anhand der Zeichnung, die einige Ausführungsbeispiele der Erfindung darstellt, sei diese näher erläutert. Es zeigt

Fig. 1 eine schematische Vorderansicht des Autodach-Lastträgers, wobei die linke Hälfte den vorderen Teil des Dachträgers und die rechte Hälfte den hinteren Teil veranschaulicht,

Fig. 2 eine schematische Draufsicht auf den Dachträger gemäß Fig. 1,

Fig. 3 eine vergrößerte Schnittansicht durch eine Stütze des Dachträgers,

Fig. 4 eine vergrößerte, im Schnitt dargestellte Detailansicht der im Längsträger untergebrachten Antriebseinrichtung mit Sperreinrichtung und Verriegelungseinrichtung,

Fig. 5 die Draufsicht auf eine abgewandelte Ausführungsform des Dachträgers,

Fig. 6 die Draufsicht einer weiteren Abwandlung eines Dachträgers,

Fig. 7 eine Schnittansicht der in Verbindung mit Fig. 6 verwendeten Stützen,

Fig. 8 eine Querschnittansicht durch den Längsträger längs der Linie 8-8 der Fig. 6,

Fig. 9 eine Querschnittansicht durch den Längsträger längs der Linie 9-9 der Fig. 6,

Fig. 10 eine Draufsicht auf eine weiter abgewandelte Ausführungsform der Erfindung mit Druckmittelbetätigung,

Fig. 11 eine Querschnittansicht der Ausbildung der mit der Ausführungsform gemäß Fig. 10 verwendeten Stütze,

Fig. 12 eine abgewandelte Ausführungsform einer Stütze, die ebenfalls in Verbindung mit der Antriebseinrichtung gemäß Fig. 10 verwendet werden kann, und

Fig. 13 eine Schnittansicht durch einen Querträger ohne Einbauten mit Darstellung eines Befestigungsprofils, um verschiedene Aufbauten an demselben Dachträger anbringen zu können.

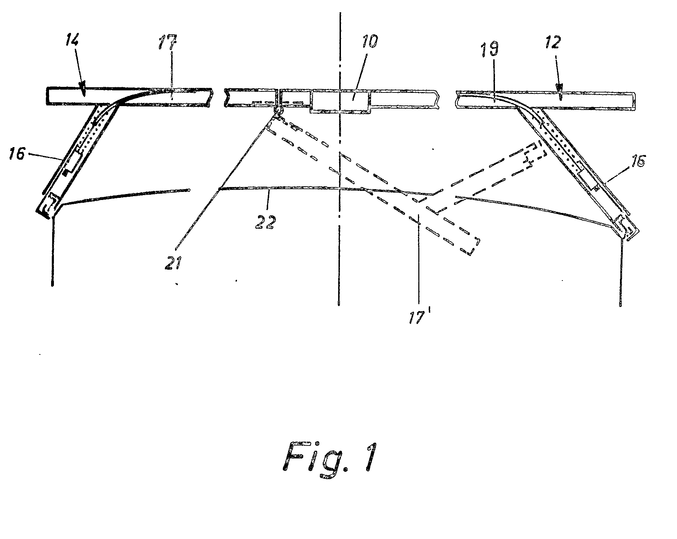

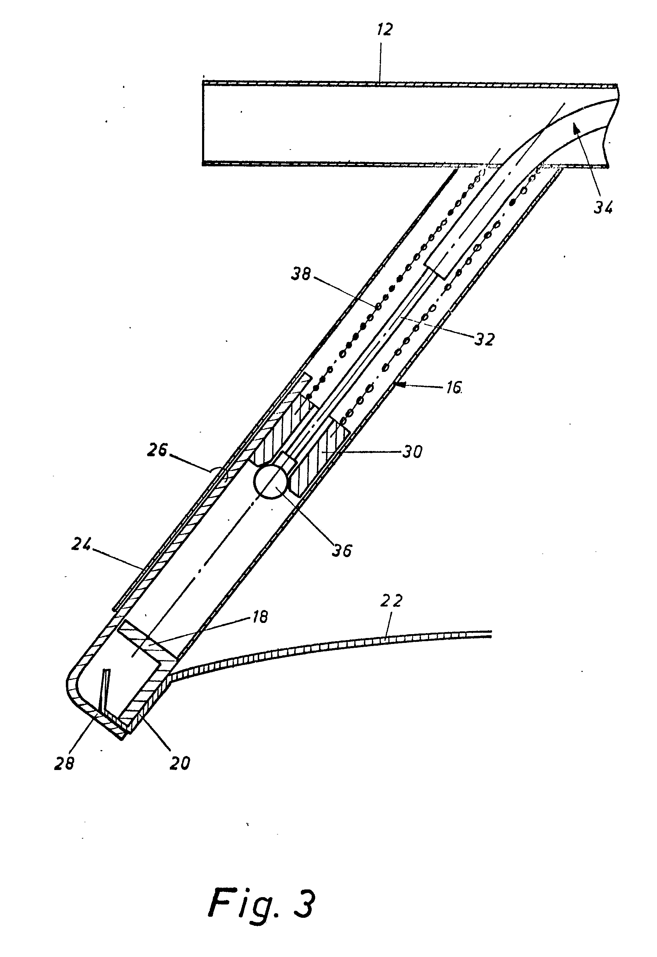

Die Fig. 1–4 stellen eine erste Ausführungsform der Erfindung dar. An einem Längsträger 10 in Form eines hohlen Profils sind zwei Querträger 12, 14 befestigt, die ebenfalls aus Hohlprofilen bestehen. Fig. 1 zeigt in der linken Hälfte den vorderen Querträger 14 und in der rechen Hälfte den hinteren Querträger 12. Jeder der Querträger 12, 14 weist eine schräg stehende Stütze 16 auf. Die vorderen Stützen 16 sind zwar kürzer als die hinteren Stützen. Sie werden der Einfachheit halber mit gleichen Bezugszahlen bezeichnet, weil der Innenaufbau und die Funktion bei allen Stützen 16 dieselbe ist. Alle Stützen 16 bestehen aus einem Rechteckprofil, an dessen unterem Ende ein Fuß 18 angeschweißt ist, der auf der Dachrinne 20 des Autodaches 22 aufliegt. Dieser Fuß 18 besteht aus einem Winkel, der zwischen der Oberwand 24 der Stütze 16 einen Schlitz für einen plattenförmigen Schieber 26 frei läßt, dessen unteres Ende in Form einer Kralle 28 um etwa 90° zurückgebogen ist, so daß die Dachrinne 20 von der Kralle untergriffen werden kann. An der Schiebeplatte 26 ist ein zentral gebohrter Block 30 angeschweißt, der zusammen mit der Platte 26 den Schieber bildet. Durch die Bohrung des Blockes 30 greift ein Zugseil 32 eines Bowden-Zuges hindurch. Das Ende des Zugseils 32 weist ein Klemmstück 36 auf, das sich an der Stirnseite des Blockes 30 in der in Fig. 3 dargestellten Sperrstellung der Kralle 28 abstützt. Eine Schraubenfeder 38 spannt den Schieber 26 nach unten in Richtung des Stützenfußes 18 vor.

Die beiden Bowdenzüge 34, 34 der beiden hinteren Stützen 16 werden durch den hinteren Querträger 12 hindurch und in den Längsträger 10 hineingeführt. Entsprechend werden auch die Bowdenzüge der vorderen Stützen von vorn her in den Längsträger 10 eingeführt. In der Mitte des Längsträgers 10 ist eine Antriebseinrichtung in Form einer Exzenterscheibe 40 um eine vertikale Achse drehbar gelagert, mit welcher die vier Zugseile 32 verbunden sind, wie nachstehend noch erläutert wird.

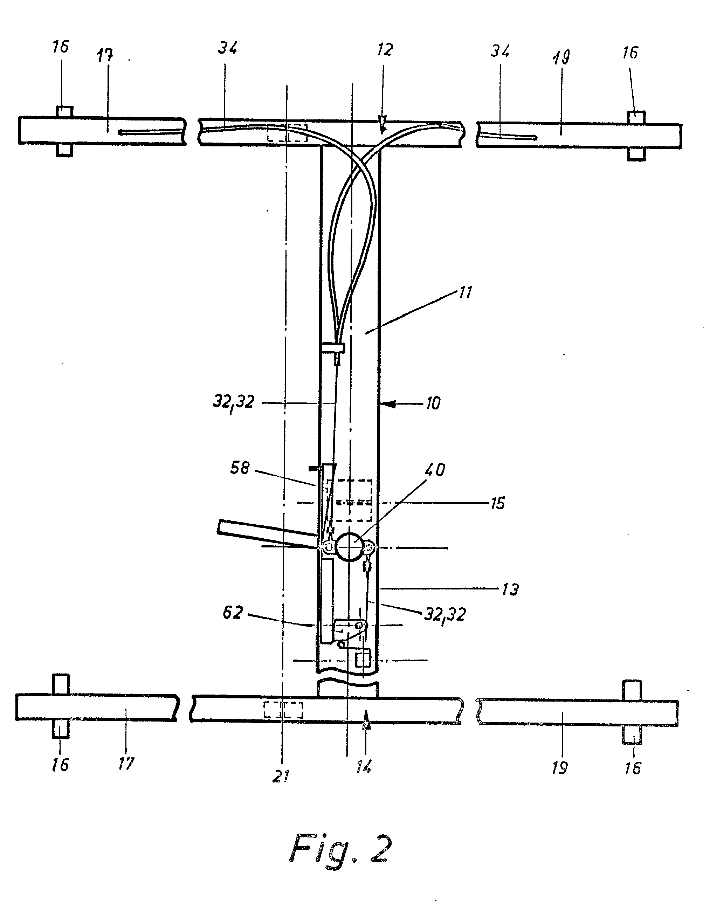

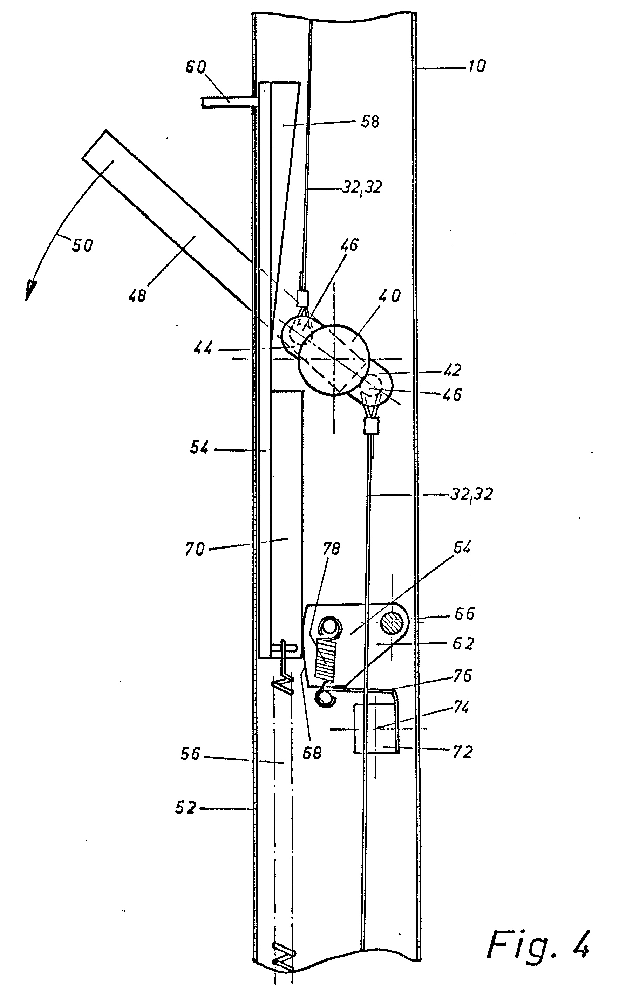

Die Exzenterscheibe 40 hat zwei diametral einander gegenüberliegende vorstehende Laschen 42, 44, die je einen Bolzen 46 aufweisen, der nach oben und nach unten über die Laschen 42, 44 vorsteht. Somit sind vier Aufhängepunkte geschaffen, und zwar für jedes der vier Zugseile 32. In den Fig. 2 und 4 verlaufen jeweils zwei Zugseile 32, 32 untereinander.

Anstelle einer Lasche mit beidseitig vorstehenden Bolzen können auch zwei im Höhenabstand liegende Laschen vorgesehen sein, zwischen denen sich der Bolzen erstreckt. Auch hier wird aber jedes Zugseil 32 einzeln aufgehängt, was den Vorteil bringt, daß beim Reißen eines Zugseils die drei übrigen Zugseile ihre Funktion beibehalten, so daß die Festklemmung des Dachträgers am Autodach gesichert bleibt.

Die Exzenterscheibe 40 weist einen Handgriff 48 auf, der vorzugsweise abnehmbar ist und z. B. einen Vierkantzapfen hat, welcher in einer koaxialen Vierkanthülse der Exzenterscheibe 40 einsteckbar ist. Es versteht sich, daß die Exzenterscheibe auf einer Welle sitzt, die in der Oberwand und der Unterwand des Längsträgers 10 gelagert ist.

Die Stellung des Hebels 48 gemäß Fig. 4 entspricht der geöffneten Stellung der Krallen 28. Die Schieber 26 sind aufgrund der Federkraft ausgefahren. Der abgebogene Krallenabschnitt hat dann einen genügend großen Abstand von der Dachrinne 20, so daß der Dachgepäckträger leicht abgenommen werden kann. Wird nun der Handgriff 48 im Uhrzeigergegendrehsinn (Fig. 4) verschwenkt, so werden alle Zugseile 32 gleichzeitig angezogen. Die Schieber 26 fahren nach innen, und die Krallen 28 nähern sich der Dachrinne 20. Vorzugsweise wird ein Schwenkwinkel von ca. 180° für die Exzenterscheibe vorgesehen, wodurch der Mittenabstand der Bolzen 46 voneinader etwa dem Hub der Krallen 28 entspricht. Bevor der Handgriff 48 bei seiner Verschwenkung in Richtung des Pfeiles 50 mit der Längsrichtung des Längsträgers 10 ausgerichtet ist, sind die Krallen 28 an der Dachrinne zur Anlage gekommen. Der restliche Schwenkwinkel des Handhebels 48 dient nun nur noch der Verklemmung der Dachrinne zwischen Fuß 18 der Stütze 16 und der Kralle 28. Im Spannbereich tritt eine Kniehebelwirkung ein und es können große Klemmkräfte mit vergleichsweise geringem Betätigungsaufwand erzielt werden. Nachdem die Spannstellung erreicht ist, findet eine selbsttätige Sicherung der Exzenterscheibe in der Klemmstellung statt, wie nachstehend beschrieben wird.

Längs einer Seitenwand 52 des Längsträgers 10 ist eine Schiebeplatte 54 verschiebbar geführt, welche mit einer Zugfeder 56 vorgespannt ist. Die Schiebeplatte 54 hat an ihrem hinteren Ende einen spitzen Keil 58 und weist einen Betätigungsstift 60 auf, der durch einen Längsschlitz in der Wand 52 hindurch nach außen ragt. Dieser Keil steht nun dauernd unter Einfluß der Zugfeder 56, und wenn die Exzenterscheibe in Richtung ihrer Sperrstellung gedreht wird, so läuft der Keil 58 nach und bewirkt eine selbsttätige Verklemmung der Exzenterscheibe 40 in der Spannstellung. Ein selbsttätiges Rückdrehen der Exzenterscheibe ist ausgeschlossen. Wenn ein Öffnen der Krallen gewünscht wird, muß der Stift 60 betätigt werden, um den Keil 58 in die in Fig. 4 dargestellte Stellung zu schieben.

Um zu verhindern, daß Unbefugte diese Öffnungsbewegung des Keils 58 vornehmen können, ist eine Verriegelungseinrichtung 62 vorgesehen, die eine Schwenkplatte 64 aufweist, welche um die Achse 66 schwenkbar gelagert ist. Die Schwenkplatte 64 hat eine Nockenfläche 68, welche auf der Bahn einer archimedischen Spirale liegt, derart, daß der in Fig. 4 oben dargestellte Achsabstand am kleinsten ist und nach unten allmählich zunimmt. Die Schiebeplatte 54 hat eine Schiene 70, mit welcher die Nockenfläche 68 der Verriegelungseinrichtung 62 zusammenwirkt, um den Keil 58 an der Schiebeplatte 54 in der Sperrstellung zu verriegeln. Diese Verriegelungsstellung ist in Fig. 4 dargestellt, jedoch befindet sich der Keil 58 in seiner anderen Endstellung, nämlich der Außer-Funktionsstellung. Der Vorteil dieser Verriegelungseinrichtung besteht darin, daß der Keil in jeder beliebigen Schiebestellung verriegelt werden kann, so daß auch Abnutzungen keinerlei Einfluß auf das sichere Verriegeln in der Sperrstellung haben. Wollte man nun die Schiebeplatte in Fig. 4 nach hinten bewegen, so würde die Schwenkplatte 64 die Tendenz erhalten, sich im Uhrzeigersinn zu drehen. Die Steigung der Nockenfläche 68 verhindert dies jedoch. Die Schiebeplatte 54 ist also dank der Verriegelungseinrichtung 62 niemals nach hinten, sondern nur nach vorn bewegbar.

Um die Verriegelungseinrichtung 62 in die Offenstellung zu überführen, ist im Längsträger 10 ein Block 72 um eine Achse 74 drehbar gelagert. Dieser Block weist ein nicht dargestelltes Zylinder-Einsteckschloß auf und kann also mittels des eingesteckten Schlüssels gedreht werden. Am Block ist ein Federbügel 76 befestigt, dessen freier Schenkel gegen die Schwenkplatte 64 drückt und diese in der Verriegelungsstellung hält. Der freie Schenkel des Federbügels 76 hat einen Zapfen, an dem eine Feder 78 aufgehängt ist, welche ihrerseits mit einem Zapfen der Schwenkplatte 64 verbunden ist. Wird mit dem Schlüssel der Block 72 um 90° gedreht, gelangt der Federbügel außer Eingriff mit der Schwenkplatte 64 und die Feder 78 wird gespannt. Sobald nun die Schiebeplatte 54 geringfügig in Richtung der Wirkung der Feder 56 bewegt wird, schwenkt die Schwenkplatte 64 außer Eingriff mit der Schiene 70 und die Verriegelungseinrichtung ist gelöst. Der Sperrkeil 58 kann dann mittels des Stiftes 60 in die Offenstellung überführt werden, um die Exzenterscheibe dann ebenfalls verschwenken zu können.

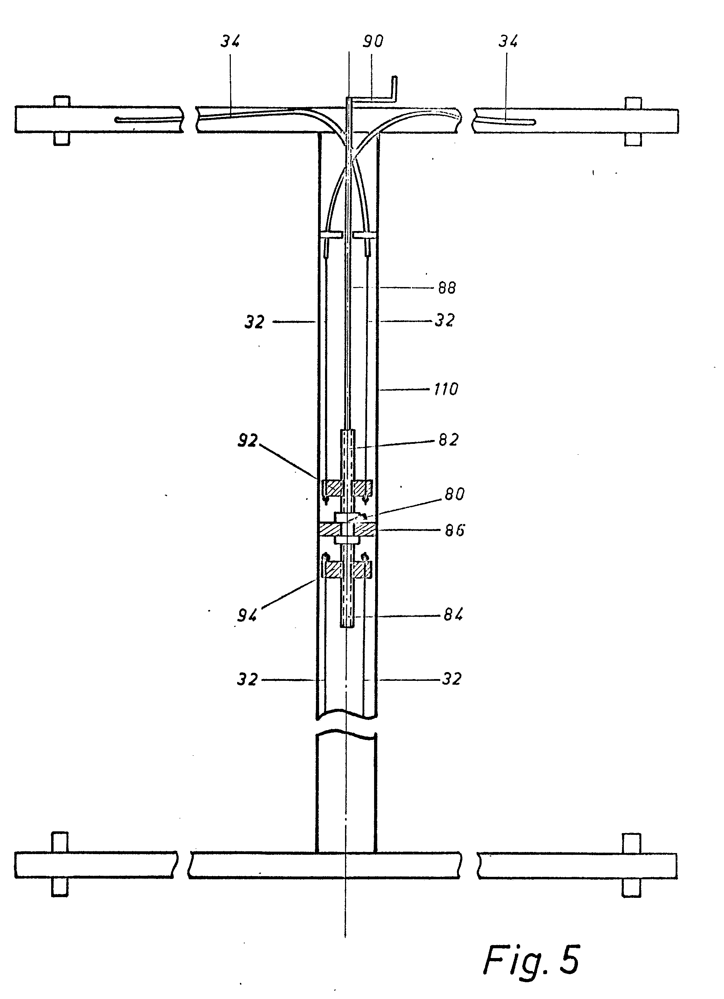

Fig. 5 veranschaulicht eine abgewandelte Ausführungsform einer Antriebseinrichtung, wobei jedoch die Stützen 16 mit dem Schieber 26 und den Bowdenzügen 34 gemäß der Ausführungsform nach Fig. 3 unverändert bleiben. Im Längsträger 110 ist eine Gewindespindel 80 mit zwei gegenläufigen Gewindeabschnitten 82, 84 drehbar, jedoch unverschiebbar in einem Lagerbock 86 gelagert. Die Gewindespindel 80 ist über eine Welle 88 stirnseitig aus dem Längsträger 110 herausgeführt und hat dort eine Handkurbel 90. Auf den beiden Gewindeabschnitten 82, 84 sind Schraubstücke 92, 94 angeordnet, die im Längsträger 110 verschiebbar, jedoch undrehbar gelagert sind. In jedem der beiden Schraubstücke 92, 94 ist jeweils ein Paar der beiden Zugseile 32, 32 der Bowdenzüge verankert. Wird nun an der Handkurbel 90 gedreht, so nähern sich die beiden Schraubstücke 92, 94 in der einen Drehrichtung, um die Zugseile zu spannen. Wird in der anderen Richtung gedreht, werden die Zugseile entlastet und die Krallen 28 können sich aufgrund der Federn 38 in die Offenstellung bewegen.

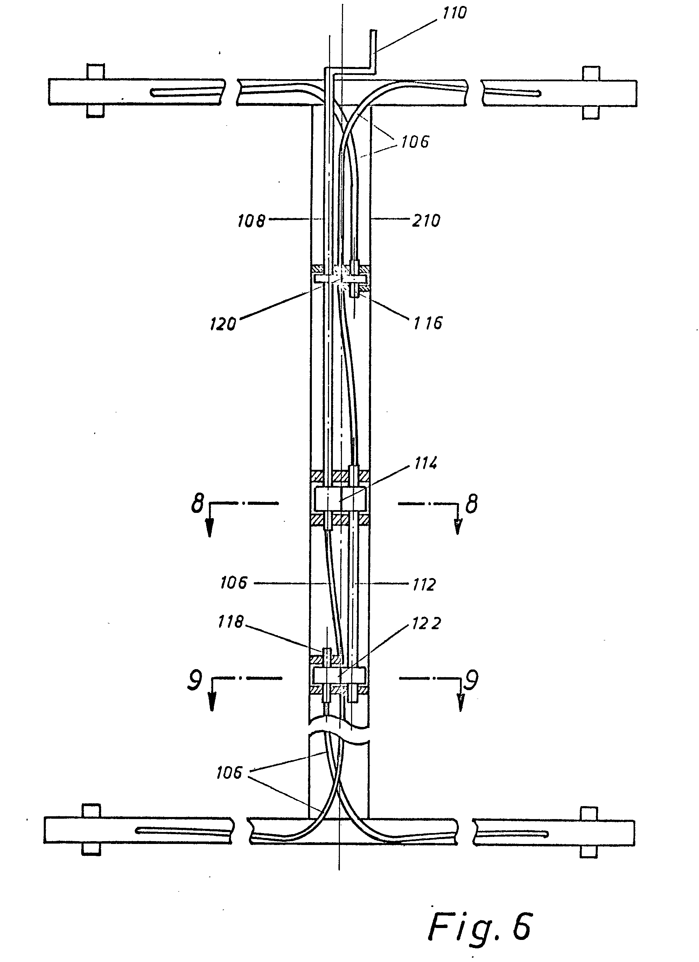

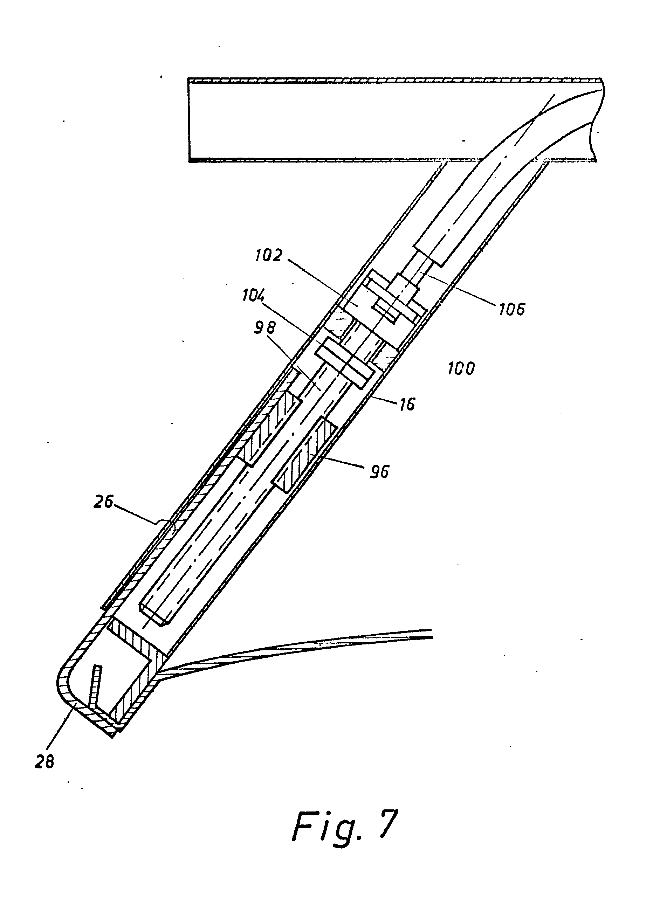

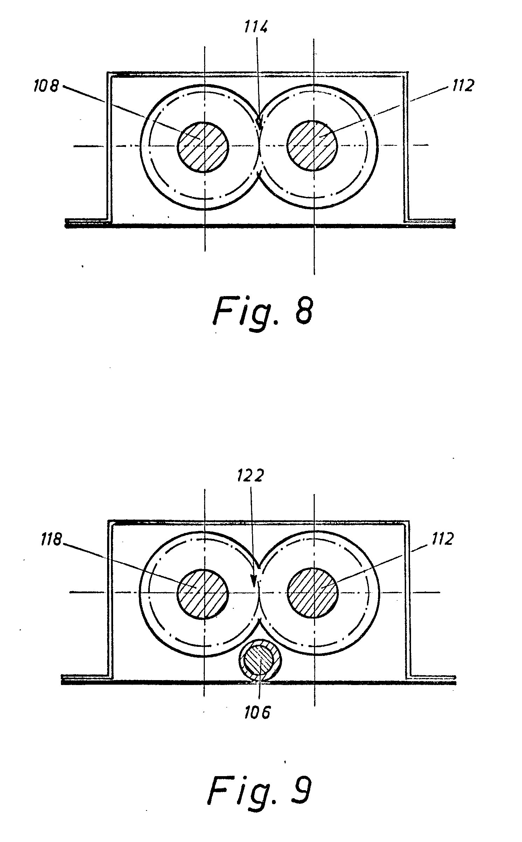

Die Fig. 6—9 veranschaulichen eine dritte Ausführungsform der Erfindung. Gemäß Fig. 7 ist in einer Stütze 16 eine Schraubspindel 98 in einem Block 96 verschraubbar, der an der Schiebeplatte 26 angeschweißt ist. Die Schraubspindel ist in einem Lagerblock 100 drehbar gelagert, welcher in der Stütze 16 befestigt ist. Gegen axiale Verschiebung der Schraubspindel 98 ist diese durch einen Spindelkopf 102 und durch Kontermuttern 104 gesichert. In das Ende des Spindelkopfes 102 ist das verpreßte Ende einer biegsamen Welle 106 eingesetzt und befestigt. Wird die Welle 106 in der einen Richtung gedreht, schiebt sich der Schieber 26 nach außen und öffnet die Kralle 28. In der anderen Drehrichtung wird die Kralle geschlossen.

Gemäß Fig. 6 ist im Längsträger 210 eine erste Welle 108 drehbar gelagert und hat eine stirnseitige Kurbel 110. Das freie Ende dieser Welle 108 ist mit einer biegsamen Welle 106 koaxial verbunden. Parallel zur Welle 108 ist eine zweite Welle 112 vorgesehen, die ebenfalls drehbar gelagert ist und die über ein Zahnradgetriebe 114 im Verhältnis 1 : 1 mit der Welle 108 gekuppelt ist. Im Träger 210 sind zwei Wellenstummel 116, 118 drehbar gelagert, die über ein Zahnradgetriebe 120 mit der Welle 108 bzw. über ein Zahnradgetriebe 122 mit der Welle 112 jeweils im Verhältnis 1 : 1 angetrieben werden. Beide Wellen 108, 112 und beide Wellenstummel 116, 118 sind je mit einer der biegsamen Wellen 106 drehfest verbunden. Wenn die Verbindung in der dargestellten Art (Fig. 6) vorgenommen wird, drehen alle Schraubspindeln 98 synchron im gleichen Drehsinn. Es können also die gleichen Schraubspindeln verwendet werden. Eine gewisse Vereinfachung der Antriebseinrichtung wäre möglich, wenn man linksgängige und rechtsgängige Schraubspindeln einsetzen würde, jedoch würde dadurch die Lagerhaltung verteuert werden.

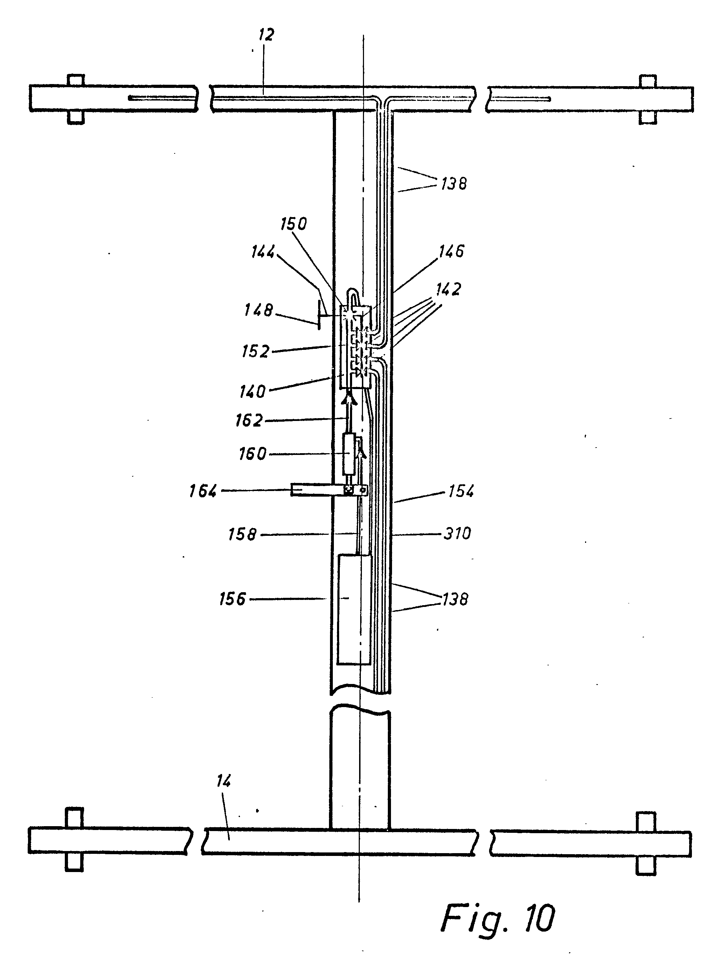

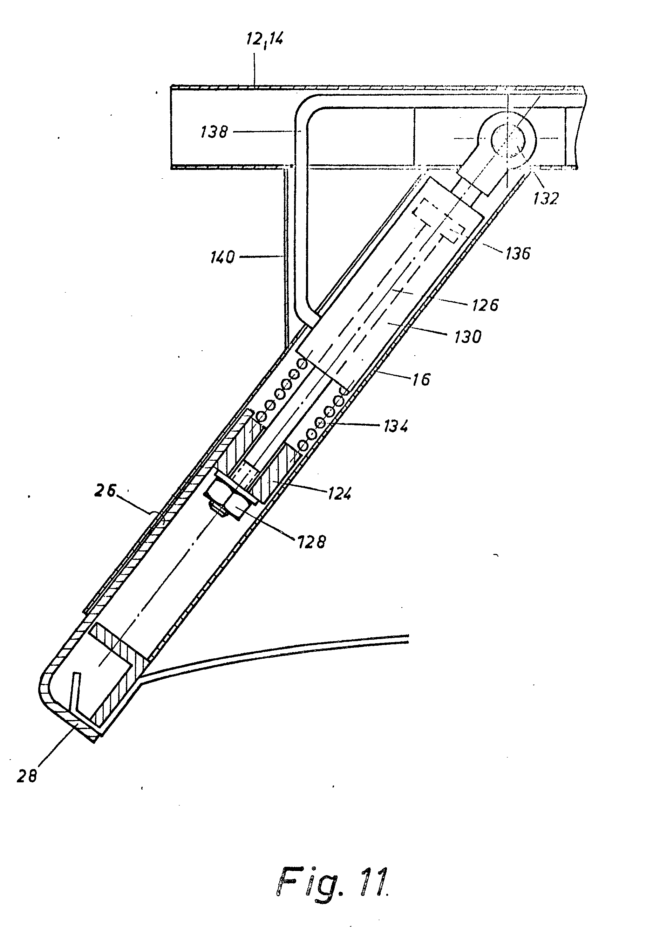

Fig. 10 und 11 veranschaulichen wiederum eine Abwandlung, und zwar ist hier eine druckmittelbetätigte Anordnung dargestellt. Gemäß Fig. 11 ist in einer Stütze 16 an der Schiebeplatte 26 ein gebohrter Block 124 angeschweißt, der eine Gewindebohrung hat, in welche das Ende einer Kolbenstange 126 eingeschraubt ist, die mit einer Mutter 128 befestigt ist. Die Kolbenstange ragt in einen Druckmittelzylinder 130 hinein, dessen stirnseitiges freies Ende an einem Bolzen 132 verankert ist, der im Querträger 12 befestigt ist. Zwischen dem Zylinder 130 und dem Block 124 ist eine Rückstellfeder 134 angeordnet, die die Schiebeplatte 26 aus der Stütze 16 auszufahren sucht. Die Kolbenstange 126 endet in einem Kolben 136, wie in Fig. 11 gestrichelt veranschaulicht ist. In den Zylinder 130 mündet eine Druckmittelleitung 138, die aus der Stütze 16 heraus und nach oben in den Querträger 12 führt. Ein im Querschnitt U-förmiger Blecheinsatz 140 ist zwischen Stütze und Querträger eingesetzt und deckt die Druckmittelleitung 138 ab.

Wie sich aus Fig. 10 ergibt, laufen alle vier Druckmittelleitungen 138 zu einer Ventileinrichtung 140. In dieser Ventileinrichtung 140 sind vier in Längsrichtung des Längsträgers 310 ausgerichtete Ventile 142 vorgesehen, jeweils eines für jede der Druckmittelleitungen 138. Alle vier Ventile 142 sind mittels einer durchgehenden Betätigungswelle 146 schaltbar, die über ein Winkelgetriebe mit einer Welle 144 verbunden ist, die aus dem Längsträger 310 herausgeführt ist und einen Betätigungshandgriff 148 aufweist. Diese Welle 144 betätigt direkt ein fünftes Ventil 150, welches am Ende einer Sammelleitung 152 angeordnet ist, in welche die vier Ventile 142 münden. An der anderen Seite schließt sich an das Ventil 150 eine Verbindungsleitung 154 an, die zu einem Druckmittelspeicher 156 führt, von wo eine Druckmittelversorgungsleitung 158 ausgeht, die in einen Pumpzylinder 160 mündet, wobei vor dem Eintritt in diesen Pumpzylinder in der Versorgungsleitung 158 ein Rückschlagventil eingebaut ist, wie durch den Pfeil in Fig. 10 angedeutet ist. Aus dem Pumpzylinder 160 führt eine Druckleitung 162 heraus, die ebenfalls über ein Rückschlagventil mit der Sammelleitung 152 in Verbindung steht. Der Pumpkolben des Pumpzylinders 160 weist einen Pumphebel 164 auf, der beispielsweise mittels eines Einsteckschlosses arretiert werden kann, um eine Betätigung durch Unbefugte zu verhindern. Der Ventilbetätigungshebel 148 ist ebenfalls herausnehmbar, und zwar kann die Öffnung durch eine Schiebeplatte oder ein Türchen geschlossen und mittels eines Schlosses abgesperrt werden. Alternativ ist es auch möglich, an der Welle 144 innerhalb des Längsträgers 310 radiale Arme anzubringen, zwischen die ein Einsteckschloß einrasten kann, um eine Drehung der Welle 144 zu verhindern.

Die Funktion ist folgende. Die Welle 144 hat drei Stellungen. In einer ersten Stellung werden alle vier Ventile 142 geöffnet, das Ventil 150 bleibt jedoch geschlossen. Wird nun der Pumphebel 164 bedient, d. h. hin- und hergeschwenkt, so wird Druckmittel aus dem Druckmittelvorrat 156 angesaugt und in die Druckmittelleitungen 138 gedrückt. Die Kolben 136 in den Zylindern 130 (Fig. 11) gehen nach oben und ziehen die Kralle 28 gegen die Dachrinne. Eine nicht dargestellte Bypassleitung mit einem Überdruckventil zwischen den Leitungen 158, 162 kann den Druck begrenzen. Ist die gewünschte Klemmkraft hergestellt, wird die Welle 144 in die zweite Stellung gedreht, in welcher die vier Ventile 142 geschlossen werden und das Ventil 150 noch geschlossen bleibt. In dieser Stellung wird die Welle 144 in der schon beschriebenen Weise arretiert. Das ganze System steht unter Druck und die Krallen 28 halten den Dachträger sicher an der Dachrinne. Soll nun der Dachträger abgenommen werden, wird nach Lösen der Sicherung die Welle 144 in die dritte Stellung gedreht, in welcher alle vier Ventile 142 und auch das Ventil 150 geöffnet werden, so daß das Druckmittel in den Druckmittelvorrat 156 abfließen kann. Die Kolbenstangen 126 fahren dann aufgrund der Wirkung der Federn 134 aus und die Krallen 28 gelangen in die Offenstellung.

Im vorstehenden ist eine Druckmittelbetätigung ganz allgemein beschrieben worden. Diese eignet sich für jedes flüssige und jedes gasförmige Druckmittel. Falls ein Druckluftsystem verwendet werden soll, entfallen der Vorratsbehälter 156 und die beiden Anschlußleitungen 154, 158. Die Pumpe 160 saugt aus der Atmosphäre an und das Ventil 150 ist zur Atmosphäre hin entlüftet.

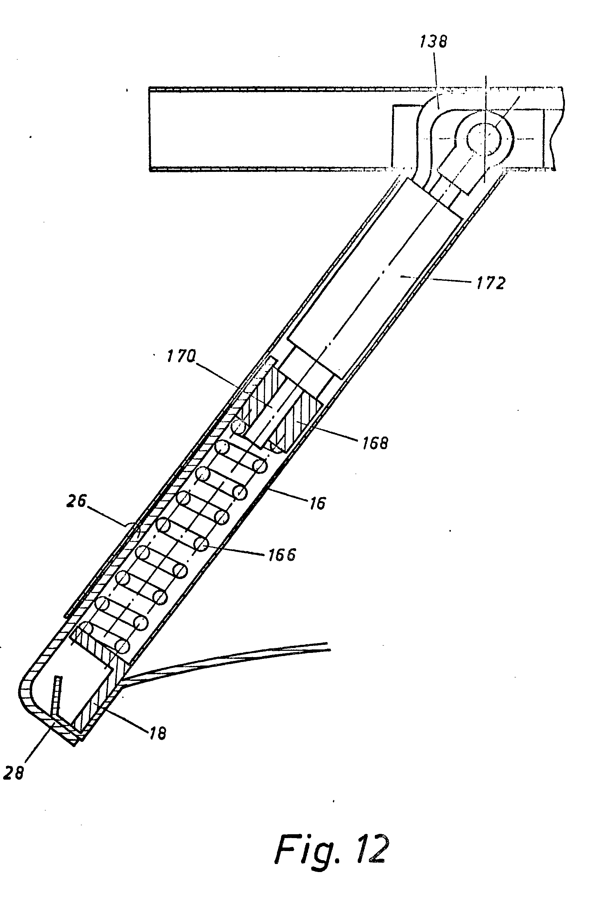

Fig. 12 veranschaulicht eine Stütze 16 ähnlich derjenigen gemäß Fig. 11, in welcher die Kralle 28 ebenfalls druckmittelbetätigt wird, und zwar mit der in Fig. 10 dargestellten Einrichtung, jedoch mit dem Unterschied, daß die Schließkraft der Kralle 28 durch eine sehr starke mechanische Schraubenfeder 166 bewirkt wird, welche sich am Stützenfuß 18 und an einem Block 168 abstützt, der an der Schiebeplatte 26 angeschweißt ist. In den Block 168 ragt das Ende einer Kolbenstange 170 hinein, welche eine Schulter hat, die am Block 168 anliegt. Die Kolbenstange 170 gehört zu einem Druckmittelzylinder 172, in den die Druckmittelleitung 138 stirnseitig mündet, derart, daß bei Druckmittelbeaufschlagung der Kolben im Zylinder abwärts gefahren wird und die Schiebeplatte 26 mit der Kralle 28 aus der Stütze ausfährt und in die Offenstellung gelangt. Der Unterschied dieser Ausführungsform zur vorbeschriebenen besteht also darin, daß die Druckmittelbetätigung nur zum Öffnen der Krallen des Dachgepäckträgers dient, so daß im Normalbetrieb das Druckmittelsystem entlastet ist.

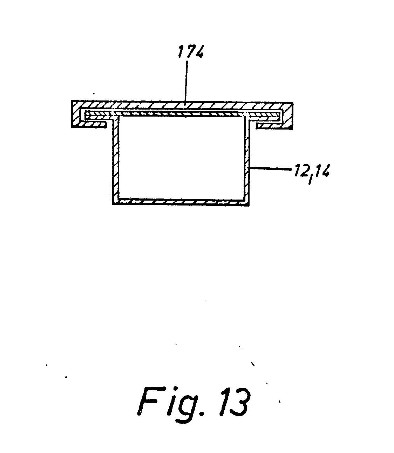

Fig. 13 schließlich veranschaulicht den Querschnitt eines Querträgers 12, der aus einem U-Profil mit zwei seitlich abstehenden Laschen besteht, auf dem ein Abdeckblech befestigt ist. Eine Profilschiene 174 kann über die überstehenden Ränder des Querträgers 12 geschoben und in geeigneter Weise verdeckt befestigt werden. Diese Profilschienen 174 können an verschiedenartigen Aufbauten befestigt sein, beispielsweise Skiträgern, Kofferträgern und Spezialträgern. An einem Basisträger können also mit wenigen Handgriffen die verschiedenartigsten Aufbauten so befestigt werden, daß eine Abnahme von unbefugter Seite ausgeschlossen ist.

Es versteht sich, daß verschiedene Abwandlungen im Rahmen der Erfindung möglich sind. Die Stützen 16 können entweder mit den Querträgern fest verbunden oder auch beweglich angeordnet sein. Letztere Ausführung erlaubt eine Anpassung an verschiedene Autodachformen und -breiten. Der Längsträger kann auch außermittig angeordnet werden, was bei besonders breiten Fahrzeugen vorteilhaft ist. Weiterhin kann die Verriegelungseinrichtung 62 auch eine Verzahnung aufweisen, etwa derart, daß um den Bolzen 66 eine Sperrklinke schwenkbar gelagert ist, die mit einer Längsverzahnung an der Schiene 70 zur Erzielung einer Selbsthemmung zusammenwirkt.

Die Antriebseinrichtungen in den Fig. 2, 5, 6 und 10 sind als Handbetätigungseinrichtungen dargestellt. Unter den Begriff einer handbetätigbaren Antriebseinrichtung fällt ausdrücklich auch eine motorisch betreibbare Antriebseinrichtung, die zum Beispiel durch Knopfdruck steuerbar ist. Bei der Ausführung gemäß Fig. 2 würde der Antriebsmotor über ein Schneckengetriebe auf das Organ 40 wirken. In den Fig. 5 und 6 würde der Motor direkt die Welle 88 antreiben und in Fig. 10 würde die Pumpe vom Motor angetrieben werden.

In den Fig. 1 und 2 sind der Längsträger 10 und beide Querträger 12, 14 geteilt und bestehen jeweils aus zwei Trägerabschnitten 11, 13 bzw. 17, 19, die mittels eines Scharniers 15 bzw. 21 schwenkbar miteinander verbunden sind. Die Schwenkachsen der Scharniere 15, 21, 21 erstrecken sich horizontal und sind an der Bodenwand der Träger 10, 12, 14 angeordnet, so daß jeweils ein Abschnitt 13 bzw. 17 jedes Trägers in eine angenäherte Parallelstellung bzw. eine spitzwinklige Stellung 17' zum anderen Abschnitt 19 geklappt werden kann, nachdem vorher eine nicht dargestellte Arretiereinrichtung gelöst worden ist. Bei Nichtgebrauch kann der Dachträger somit auf engstem Raum verstaut werden.

**Patentansprüche**

1. Autodach-Lastträger, bestehend aus mindestens vier jeweils paarweise durch einen Querträger (12, 14) miteinander verbundenen Stützen (16), deren Enden Füße (18) aufweisen, die auf der Dachrinne (20) des Fahrzeugdaches aufliegen, wobei jeder Stütze eine die Dachrinne untergreifende Kralle (28) zugeordnet ist, derart, daß die Dachrinne jeweils zwischen einem Fuß und einer Kralle eingeklemmt ist, und wobei die beiden Querträger durch mindestens einen Längsträger (10, 110, 210, 310) zu einem Gestell miteinander verbunden sind, dadurch gekennzeichnet, daß jede Kralle (28) an einem in der Stütze (16) längsverschiebbar gelagerten Schieber (26) angeordnet ist, und daß an einem der Träger (10, 12, 14) eine zentrale von Hand oder motorisch betätigbare Antriebseinrichtung (40, 80, 108—112, 140, 164) vorgesehen ist, mit welcher alle Schieber über je eine Antriebsverbindung (34, 106, 138) verbunden sind.

2. Autodach-Lastträger nach Anspruch 1, dadurch gekennzeichnet, daß die Schieber (26) je mittels einer Feder (38) in Offenstellung der Kralle (28) vorgespannt sind, und daß die Antriebsverbindung aus einem Seilzug (34) und/oder Zuggestänge besteht bzw. eine drehbare biegsame Welle (106) aufweist.

3. Autodach-Lastträger nach einem der Ansprüche 1 oder 2, dadurch gekennzeichnet, daß die vorzugsweise am mittleren Längsträger (10) vorgesehene Antriebseinrichtung eine zwischen zwei Endstellungen drehbare Exzenterscheibe (40) aufweist, an deren zwei einander diametral gegenüberliegenden Enden (42, 44) jeweils zwei Antriebsverbindungen (32, 32) befestigt sind und daß jede Antriebsverbindung (32) eine eigene Aufhängung der Exzenterscheibe (40) aufweist.

4. Autodach-Lastträger nach Anspruch 3, dadurch gekennzeichnet, daß eine Sperreinrichtung (58, 60) zum Verklemmen der Exzenterscheibe (40) in der der Schließstellung der Krallen (28) entsprechenden Drehstellung vorgesehen ist.

5. Autodach-Lastträger nach Anspruch 4, dadurch gekennzeichnet, daß die Sperreinrichtung einen längs des Längsträgers (10) verschiebbaren Keil (58) aufweist, der in der Sperrstellung zwischen Exzenterscheibe (40) und einer Längsträgerwand (52) liegt und daß der Keil (58) in Sperrstellung mittels einer Feder (56) vorgespannt ist.

6. Autodach-Lastträger nach Anspruch 5, dadurch gekennzeichnet, daß die Sperreinrichtung mittels einer Verriegelungseinrichtung (62) in Sperrstellung verriegelbar und mittels eines Schlosses abschließbar ist.

7. Autodach-Lastträger nach Anspruch 1 oder 2, dadurch gekennzeichnet, daß im Längsträger (110) eine Gewindestange (80) mit zwei gegenläufigen Gewindeabschnitten (82, 84) drehbar und axial unverschiebbar gelagert ist und mit einem Handantrieb (90) verbunden ist, und daß auf beiden Gewindeabschnitten (82, 84) je ein Gewindestück (92; 94) längs beweglich, jedoch undrehbar angeordnet ist, an welchem die Antriebsverbindungen (32, 32) paarweise verankert sind.

8. Autodach-Lastträger nach Anspruch 1 oder 2, dadurch gekennzeichnet, daß der Schieber (26) ein Gewindestück (96) aufweist, das mit einer Schraubspindel (98) in Eingriff steht, welche über eine biegsame Welle (106) mit der Antriebseinrichtung (108, 110, 112) verbunden ist, welche zwei parallele, sich in Längsrichtung des Längsträgers erstreckende und im Antriebseingriff miteinander stehende drehbare Wellen (108, 112) aufweist, mit denen die biegsamen Wellen (106) direkt oder über Getrieberäder miteinander verbunden sind.

9. Autodach-Lastträger nach Anspruch 1 oder 2, dadurch gekennzeichnet, daß der Schieber (26) mit einer in jeder Stütze (16) angeordneten Druckmittel-Kolben-Zylinder-Anordnung (126, 130, 136) über Druckmittelleitungen (138) an eine handbetätigbare Pumpe (160) angeschlossen sind.

10. Autodach-Lastträger nach einem der Ansprüche 1 bis 9, dadurch gekennzeichnet, daß der Längsträger (10) und/oder beide Querträger (12, 14) jeweils aus zwei scharnierartig miteinander verbundenen zusammenklappbaren Abschnitten (11, 13; 17, 19) besteht oder bestehen.

**Claims**

1. A car top carrier support consisting of at least four legs (16) connected in pairs by a cross bar (12, 14) respectively, the legs provided with feet (18) at their ends, whereby each leg is provided with a claw (28) engaging below the gutter such that the gutter being clamped between one foot and one claw and whereby the two bars are connected by at least one longitudinal bar (10; 110; 210; 310) for forming a frame, characterized in that each claw (28) is arranged at a slide (26) which is displaceably guided in the leg (16) in the longitudinal direction thereof and that a central operating means (40, 80, 108—112, 140, 164) operable by hand or by a motor is provided at one of said bars (10, 12, 14), all of said slides being connected with the central operating means by a drive connection (34, 106, 138) respectively.

2. A car top carrier according to claim 1, characterized in that the slides (26) are pre-loaded into open positions of the claws (28) by a spring (38) respectively and that the driving connection comprises a pull wire (34) and/or a pull lever system or is provided with a rotatable flexible shaft (106).

3. A car top carrier according to one of the claims 1 or 2, characterized in that the central operating means preferably provided at the central longitudinal bar (10) comprises a rotatable eccentric disc (40), rotatably arranged between two end positions and at two diametrically opposed ends (42, 44) thereof a pair of drive connections (32, 32) are fastened respectively, and that each drive connection (32) has an own suspension means at the eccentric disc (40).

4. A car top carrier according to claim 3, characterized in that a locking mechanism (58, 60) is provided for clamping the eccentric disc (40) in that rotation position corresponding to the closed positions of the claws (28).

5. A car top carrier according to claim 4, characterized in that the locking mechanism is provided with a wedge (58) displaceably arranged in the longitudinal direction of the longitudinal bar (10), the wedge in its locking position being positioned between the eccentric disc (40) and a wall (52) of the longitudinal bar, and that the wedge (58) is pre-loaded in the direction of its locking position by means of a spring (56).

6. A car top carrier according to claim 5, characterized in that the locking mechanism is interlockable in the locking position thereof by means of a securing device (62) and is lockable by means of a lock.

7. A car top carrier according to claim 1 or 2, characterized in that a threaded spindle (80) is rotatably and non-displaceably mounted in axial direction within the longitudinal bar (110), the spindle having a pair of thread sections (82, 84) working in opposite directions, the spindle being connected with a hand-operated drive (90), and that on both of the thread sections (82, 84) a screw body (92; 94) is non-rotatably mounted respectively for a longitudinal movement, the drive connections being fastened in pairs at the screw bodies.

8. A car top carrier according to claim 1 or 2, characterized in that the slide (26) is provided with a screw body (96) which engages a threaded spindle (98) which is connected with the operating means (108, 110, 112) by a flexible shaft (106), the operating means being provided with a pair of parallel rotable shafts (108, 112) extending in the longitudinal direction of the longitudinal bar and being in driving engagement with one another, the flexible shafts being connected with the rotable shafts (108, 112) directly or by means of gears.

9. A car top carrier according to claim 1 or 2, characterized in that the slide (26) and a pressure medium piston-cylinder arrangement (126, 130, 136) are connected with an hand-operated pump (160) via pressure medium conduits (138), one of the pressure medium piston cylinder arrangements being arranged in each of the legs (16).

10. A car top carrier according to one of the claims 1 to 9, characterized in that the longitudinal bar (10) and/or both of the cross bars (12, 14) consist of a pair of foldable sections (11, 13; 17, 19) hingedly connected with one another respectively.

## Revendications

1. Support de charge pour pavillon d'automobile, constitué par:

— au moins quatre montants (16) reliés entre eux dans une disposition jumelée par une poutre transversale (12, 14) dont les extrémités présentent des pieds (18) qui prennent appui sur le jet d'eau (20) du pavillon du véhicule,

— une griffe (28) qui prend sous le jet d'eau du pavillon étant combiné à chaque montant de telle manière que, à chaque fois, le jet d'eau de pavillon soit serré entre un pied et une griffe,

— et les deux poutres transversales reliées entre elles par au moins une poutre longitudinale (10, 110, 210, 310) pour former un châssis,

caractérisé en ce que chaque griffe (28) est montée sur un coulisseau (26) mobile en translation longitudianel dans le montant (16) et en ce que, sur l'une des poutres (10, 12, 14) est prévu un dispositif d'entrainement central (40, 80, 108 – 112, 140, 164) pouvant être actionné à la main ou par des moyens à moteurs, auxquels tous les coulisseaux sont reliés par l'intermédiaire d'une liaison d'entrainement (34, 106, 138) pour chacun.

2. Support de charge pour pavillon d'automobile suivant la revendication 1, caractérisé en ce que les coulisseaux (26) sont précontraints dans la position d'ouverture de la griffe, chacun au moyen d'un ressort (38) et en ce que la liaison d'entrainement est constituée par un dispositif de traction à câble (34) et/ou une tringlerie de traction ou présente un arbre flexible tournant (106).

3. Support de charge de pavillon d'automobile suivant l'une des revendications 1 ou 2, caractérisé en ce que le dispositif d'entrainement, de préférence prévu sur la poutre longitudinale centrale (10) présente un disque de palonnier (40) qu'on peut faire tourner entre deux positions extrêmes et à chacune de deux extrémités diamétralement opposées (42, 44) duquel sont fixés deux liaisons d'entrainement (32, 32) et en ce que chaque liaison d'entrainement (32) présente son propre accrochage sur le disque d'excentrique (40).

4. Support de charge pour pavillon d'automobile suivant la revendication 3, caractérisé en ce qu'il est prévu un dispositif de blocage (58, 60) pour immobiliser le disque de palonnier (40) dans la position de rotation correspondant à la position de fermeture des griffes (28).

5. Support de charge pour pavillon de véhicule suivant la revendication 4, caractérisé en ce que le dispositif de blocage présente un coin (58) pouvant être déplacé en translation le long de la poutre longitudinale (10) et qui, dans le position de blocage, se trouve entre le disque de palonnier (40) et une paroi (52) de la poutre longitudinale et en ce que le coin (58) est précontraint dans la position de blocage au moyen d'un ressort (56).

6. Support de charge pour pavillon de véhicule suivant la revendication 5, caractérisé en ce que le dispositif de blocage peut être verrouillé dans la position de blocage au moyen d'un dispositif de verrouillage (62) et peut être condamné au moyen d'une serrure.

7. Support de charge pour pavillon d'automobile suivant la revendication 1 ou 2, caractérisé en ce qu'à l'intérieur de la poutre longitudinale, une tige filetée (80) comportant deux segments filetés l'un en sens inverse de l'autre (82, 84) est montée libre en rotation et bloquée en translation axiale et reliée à un entrainement à main (90) est montée, longitudinalement mais bloquée en rotation une pièce filetée (92, 94) à laquelle les liaisons d'entrainement (32, 32) sont ancrées en disposition jumelée.

8. Support de charge pour pavillon d'automobile suivant la revendication 1 ou 2, caractérisé en ce que le coulisseau (26) présente une pièce filetée (96) qui est prise avec une vis (98) qui est reliée par l'intermédiaire d'un arbre flexible (106) au dispositif d'entrainement (108, 110, 112) qui présente deux arbres (108, 112) parallèles, qui s'étendent dans la direction longitudinale de la poutre longitudinale et sont en prise d'entrainement entre eux, avec lesquels les arbres flexibles (106) sont reliés directement ou sont reliés entre eux par l'intermédiaire de roues dentées.

9. Support de charge pour pavillon d'automobile suivant la revendication 1 ou 2, caractérisé en ce que le coulisseau (26) est muni d'un dispositif à piston et cylindre à fluide sous pression (126, 130, 136) disposé dans chaque montant (16), qui est relié à une pompe (160) pouvant être actionné à la main par l'intermédiaire d'une conduite de fluide sous pression (138).

10. Support de charge pour pavillon d'automobile suivant l'une des revendications 1 à 9, caractérisé en ce que la poutre longitudinale (10) et/ou les deux poutres transversales (12, 14) est ou sont constituée(s) chacune par deux segments (11, 13; 17, 19) reliés entre eux à la façon d'une charnière et pouvant être repliés l'un contre l'autre.

Fig. 1

**Fig. 2**

*Fig. 3*

*Fig. 4*

Fig. 5

Fig. 6

Fig. 7

108    114    112

## Fig. 8

118    122    112

106

## Fig. 9

Fig. 10

**Fig. 11.**

Fig. 12

174

12,14

# Fig. 13